Europäisches Patentamt

European Patent Office

Office européen des brevets

(11) Publication number: **0 511 769 A1**

## EUROPEAN PATENT APPLICATION

(21) Application number: **92303535.6**

(22) Date of filing: **21.04.92**

(51) Int. Cl.⁵: **G06F 13/24**

(30) Priority: **01.05.91 US 694161**

(43) Date of publication of application:
**04.11.92 Bulletin 92/45**

(84) Designated Contracting States:
**DE FR GB**

(71) Applicant: **International Business Machines Corporation**
**Old Orchard Road**
**Armonk, N.Y. 10504(US)**

(72) Inventor: **Bealkowski, Richard**
**1401 Hummingbird Drive**
**Delray Beach, Florida 33444(US)**
Inventor: **Reid, James Darrell**
**600 Mission Hill Road**
**Boynton Beach, Florida 33435(US)**

(74) Representative: **Blakemore, Frederick Norman**
**IBM United Kingdom Limited Intellectual**
**Property Department Hursley Park**
**Winchester Hampshire SO21 2JN(GB)**

(54) Method and apparatus for processing interrupts in a computer system.

(57) An interrupt subsystem in a computer system processes shared level interrupts by direct transfer to the single correct interrupt service routine without an iterative transfer-of-control sequence. Direct transfer is accomplished by comparing data in a predetermined table with data retrieved from the I/O device 606. When a match is found, indicating the correct device, then control is transferred to the interrupt handler whose address is stored in the table 610. Provision is made for compatibility with pre-existing iterative transfer-of-control systems 608.

```
600 ─┐  Hardware Interrupt
           │
           ▼
602 ─┐  vector to first-level
        interrupt routine
           │
           ▼
604 ─┐  check table entries
        on the corresponding
        level
           │
           ▼                                         608 ─┐
606 ─┐  interrupting        no    Revert to old method
        device in table ?  ────▶   for compatibility
           │
          yes
           │
           ▼
610 ─┐  transfer control to
        corresponding handler
```

FIG. 6

## Field of the Invention

This invention relates to computer systems and in particular to a method and apparatus for permitting a computer system to process hardware interrupts in a direct and efficient manner.

## Background of the Invention

Personal computer systems in general, and IBM personal computers in particular, have attained widespread use for providing computer power to many segments of today's society. Personal computer systems can usually be defined as a desk top, floor standing, or portable computer that consists of a system unit having a system processor, a display monitor, a keyboard, one or more diskette drives, a fixed disk storage, and an optional printer. These systems are designed primarily to give independent computing power to a single user or small group of users and are inexpensively priced for purchase by individuals or businesses. Examples of such personal computer systems are IBM's PERSONAL COMPUTER, PERSONAL COMPUTER XT, PERSONAL COMPUTER AT and IBM's PERSONAL SYSTEM/2 (hereinafter referred to as the IBM PC, XT, AT, and PS/2 respectively) Models 25, 30, 50, 60, 70, 80, 90, and 95.

These systems can be classified into two general families. The first family, usually referred to as Family 1 Models, use a bus architecture exemplified by the IBM AT and other "IBM compatible" machines. The second family, referred to as Family 2 Models, use IBM's Micro Channel bus architecture exemplified by IBM's PS/2 Models 50 through 95. The bus architectures used in Family 1 and Family 2 are well known in the art.

Beginning with the earliest personal computer system of Family 1 models, the IBM PC, and through the Family 2 models the central processing unit was chosen from the Intel "86 Family" of processors. The Intel 86 Family of processors includes the 8088, 8086, 80286, 80386, and 80486 processors commercially available from Intel Corporation. The architecture of the Intel 86 Family of processors provides an upwardly compatible instruction set which assists in preserving software investments from previous processors in the 86 family. This upward compatibility of processors which preserves the software application base is one of the major factors which contributed to the enormous success of the IBM PC and subsequent models.

The IBM PC and XT were the first models of the IBM personal computer line and used the Intel 8088 processor. The next significant change to IBM personal computer systems was the IBM AT which used the Intel 80286 processor. The PS/2 line spanned several of the Intel processors. A system similar to the PC and XT was a version of the PS/2 Model 30 which used an Intel 8086. The PS/2 Models 50 and 60 both used the Intel 80286 processor. The Intel 80386 processor is used in the IBM PS/2 Model 80 and certain versions of the IBM PS/2 Model 70. Other versions of the IBM PS/2 Model 70, as well as the PS/2 Models 90 XP 486 and 95 XP 486, use the Intel 80486 processor. One of the common points in all these systems is the use of an Intel 86 family processor. A variety of commonly available and well known software operating systems, such as DOS or OS/2, can operate on various members of the Intel family of processors.

The processors in the Intel 86 family support a variety of "modes". The basic mode in the Intel 86 family is "Real" mode. Real mode is the only operating mode of the 8088 and 8086. Real mode supports a one megabyte address space. There are no protection mechanisms available in the 8088 and 8086 processors. The 80286 supports both a Real and "Protected" mode of operation. As the name "Protected" implies, Protected mode provides a protected mode of operation. This protection prevents an application from interfering with the operation of other applications or the operating system. The 80286 provides extended addressing capabilities over the 8088 and 8086 by allowing up to 16 megabytes to be directly addressed. To maintain downward compatibility the 80286 can be operated in Real mode to emulate the Real mode of the 8088 or 8086. The 80386 and 80486 extend the Intel 86 family architecture even further by providing the ability to address up to four gigabytes of physical memory. The 80386 and 80486 also support a "Virtual 86" mode of operation. The Virtual 86 mode supports the operational characteristics of the Real mode within the overall confines of the protected mode environment. This Virtual 86 mode is useful for providing a very high level of compatibility with applications which run under the DOS operating system.

Personal computer systems such as IBM's PS/2 Models 50 through 95 utilize an interrupt controller to manage asynchronous hardware events called interrupt requests. An interrupt request is a signal from a device which tells an interrupt controller that the device requires attention from the system. Reasons for the interrupt request include notifying the system of available data or posting status. There are a plurality of interrupt signals in the system each corresponding to an interrupt level. A plurality of devices can be operating on a single level. When a plurality of devices are operating on a single level that level is said to be shared. The interrupt controller is electrically connected to the central processor of the system. This electrical connection allows the interrupt controller to notify the processor of an interrupt request. The interrupt controller manages prioritization of interrupts.

The processor selects an interrupt service routine based on the level of the interrupt. More than one hardware device can indicate an interrupt on a shared interrupt level. These levels are shared out of necessity because hardware interrupt levels are a finite resource and can be quickly used up. Therefore, even though it would be possible to assign a unique interrupt level, the limitations placed on the system in terms of its ability to expand make this an undesirable alternative. Each interrupting device must have a software interrupt service routine to handle the interrupt. Current methods for handling interrupts on shared levels require an iterative process to identify the correct software interrupt service routine. This non-direct method of identifying the correct service routine can introduce inefficiencies as the number of devices on a shared level increase. Each hardware interrupt causes a transfer of control to one specific memory address. The software beginning at this address is the beginning of the first-level" interrupt handler. The first-level interrupt handler then transfers to a second-level interrupt handler which will service the interrupt.

Current methods of handling interrupts vary, but can be described as two basic types, chaining and polling. The chaining method consists of software routines which are chained together by pointers. Each routine is designed for a particular I/O device. This places a burden on system performance because the routine required to service the particular I/O request may be at the end of the chain, requiring numerous transfers of control between routines to be executed merely to locate the desired routine. In addition, this method introduces a system integrity problem since it allows a loadable interrupt handler to alter interrupt vectors, and it relies on the loadable interrupt handler to maintain the interrupt chain.

A second method of handling interrupts on a shared level system is the polling method. In this method, the first-level interrupt handler polls each of the second-level interrupt handlers until it finds the interrupt handler for the device in question. This requires a number of transfer and return of control actions to be performed. This method introduces an excessive level of overhead causing time delays in the time-critical area of interrupt response.

Both the chaining and polling methods require a number of transfer-of-control sequences to service interrupts. These transfers of control can adversely affect the time it takes to respond to an interrupt and degrade system performance. Current methods of interrupt handling in shared interrupt level systems have reduced system integrity due to the ability of the second-level interrupt handler to alter the interrupt chain and reduced system performance caused by an excessive sequence of control-transfers to identify the correct interrupt service routine. Both methods are unable to directly access the interrupt handler in shared level systems.

Disclosure of the Invention

Thus the present invention provides a computer system including:

an interrupt controller for electrical connection to a plurality of I/O devices, said interrupt controller comprising means for accepting interrupt signals from each of said I/O devices, means for prioritizing the interrupt signals according to levels, and means for outputting said prioritized interrupt signals;

a processor, said processor including means for receiving said prioritized interrupt signals from said interrupt controller;

storage means for holding a table, each entry in the table being associated with an I/O device and including data identifying the I/O device and address data for an interrupt handler associated with the I/O device;

means for determining the interrupt status of each I/O device; and

comparison and selection means for comparing the device identifying data for each table entry with the I/O device interrupt status for that device and directly selecting the interrupt handler address associated with that I/O device when said comparison means indicates that the I/O device interrupt status and the device identifying data match.

Typically the device identifying data comprises an I/O address for that device and a test value. The interrupt status is obtained from this I/O address and compared against the test value. If a match is obtained this indicates that the device for that table entry is the origin of the interrupt signal, and the appropriate interrupt handler routine can then be invoked directly using the interrupt handler address that is also stored in that table entry. Thus in the interrupt subsystem of such a computer system the time consuming iterative transfer-of-control sequence is replaced with a mechanism which is capable of independently determining the single correct interrupt service routine by comparing data in a predetermined table with data retrieved from the I/O device. When a match is found, indicating the correct device, then control is transferred to the interrupt handler whose address is stored in the table.

Preferably the computer system further comprises a final entry in the table having the address of a chaining or polling interrupt handler, said final entry being located at the end of the table and including device identifying data which does not match any I/O device interrupt status; and means for selecting said chaining or polling interrupt handler when an I/O device which does not match any other table entry presents an interrupt. This allows compatibility to be maintained with previous versions of interrupt handlers.

The invention also provides a method for processing interrupts in a computer system, said method comprising the steps of:

receiving an interrupt signal and interrupt status from at least one I/O device;

prioritizing the interrupt signal according to interrupt level;

storing a table, each entry in the table being associated with an I/O device and including data identifying the I/O device and address data for an interrupt handler associated with the I/O device;

comparing the device identifying data for each table entry with the I/O device interrupt status for that device; and

directly selecting the interrupt handler address associated with that I/O device when said comparing step indicates that the I/O device interrupt status and the device identifying data match.

Brief Description of the Drawings

FIG. 1 illustrates interrupt handling for non-shared interrupt vectors.
FIG. 2A illustrates the interrupt vector table in real mode.
FIG. 2B illustrates the interrupt vector table in protected mode.
FIG. 3A illustrates interrupt handler chaining.
FIG. 3B illustrates interrupt handler polling.
FIG. 4 illustrates a typical computer system.
FIG. 5 is a block diagram of the planar in the computer system shown in Fig. 4.
FIG. 6 is a flow chart showing a method in accordance with the invention.
FIG. 7 is a block diagram showing the relationship between the hardware and the software used in the method of Figure 6.
FIG. 8 shows the format of the data in the device routing table.
FIG. 9 shows sample data in the device routing table.

Detailed Description

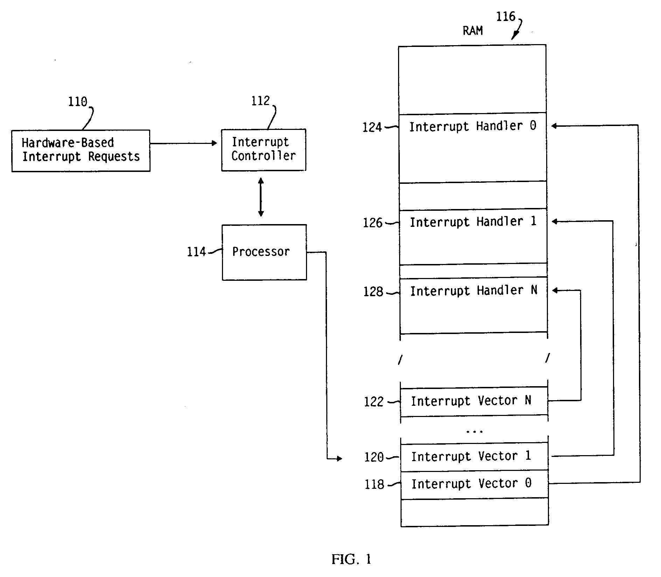

To better understand the invention, a more detailed description of the operation of prior art systems as shown in Figs. 1-4 will first be made. Referring now to these drawings, and in particular to FIG. 1, hardware devices generate interrupt requests 110 which are detected by an interrupt controller device 112. The interrupt controller 112 manages these input signals according to a predetermined scheme. The interrupt controller 112 signals the central processing unit (CPU) processor 114 when it determines that an interrupt is to be serviced. The interrupt controller 112 informs the processor 114 which interrupt type is to be serviced. This interrupt type directly corresponds to one of the 256 possible interrupt address pointers 118-122 that the processor can retrieve. The processor 114 then uses this address pointer as a means for locating the beginning address of an interrupt service routine 124-128. The address pointers 118-122 and the interrupt service routines 124-128 are located in the system memory space, usually in RAM 116. It should be noted that memory other than RAM, such as ROM or reprogrammable ROM can also be used. The processor 114 then begins executing the interrupt service routine found at the address corresponding to the address pointer retrieved.

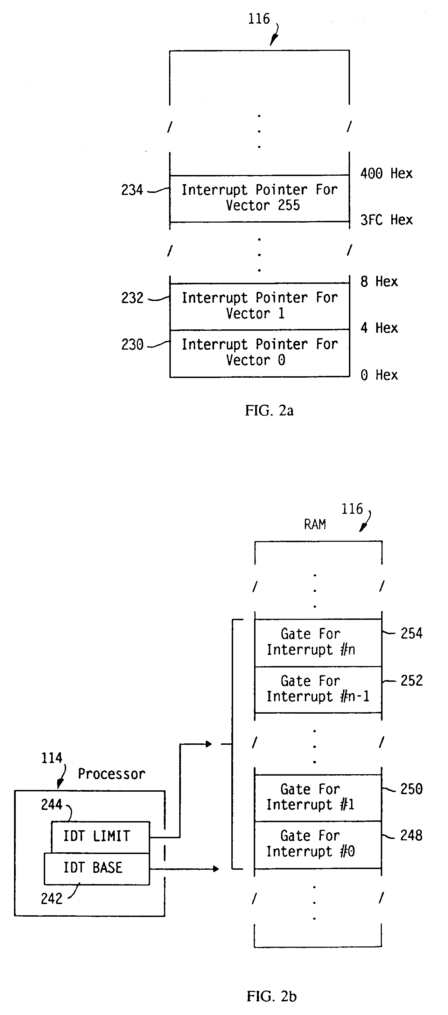

The storage of address pointers for interrupt service routines varies depending on the current operating mode of the processor. Referring now to FIG. 2A, the Real mode interrupt vector space 230-234 is shown within the overall system address space of RAM 116. In the Real mode each interrupt vector is stored as a four byte Real mode pointer with a total of 256 vectors available. The Real mode vectors are located at a set of fixed addresses within the system address space 116. Specifically, addresses 0 through 3FF hex. The interrupt controller 112 contains a value which indexes an interrupt request into this 256 entry vector table 230-234.

Referring now to FIG. 2B, when operating in the Protected mode the processor 114 contains an Interrupt Descriptor Table (IDT) Base value 242 and an IDT Limit value 244. These values allow the interrupt vectors 248-254, or "gates" as they are called in the Protected mode, to be located anywhere in the system address space of RAM 116 rather than the fixed locations of Real mode. The Protected mode interrupt handler address pointers 248-254 are usually stored in RAM 116.

More than one hardware device can indicate an interrupt on a shared interrupt level. These levels are shared out of necessity because hardware interrupt levels are a finite resource and can be quickly used up. Each interrupting device must have a software interrupt service routine to handle the interrupt. Current methods for handling interrupts on shared levels require an iterative process to identify the correct software interrupt service routine. This non-direct method of identifying the correct service routine can introduce inefficiencies as the number of devices on a shared level increases. Each hardware interrupt causes a transfer of control to one specific memory address. The software beginning at this address is the beginning of the "first-level" interrupt handler.

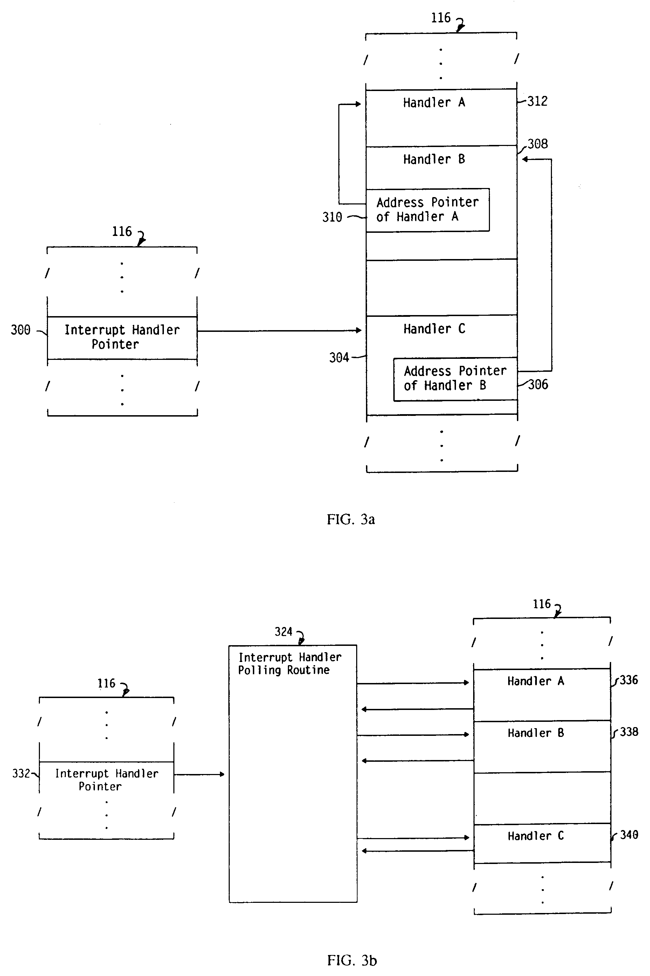

Current methods of handling shared interrupts vary, but can be described as one of two basic types: chaining and polling. Referring now to FIG. 3A, interrupt chaining is where the interrupt handler pointer 300 in RAM 116 points to the beginning of a chain of interrupt handlers 304, 308, 312. When an interrupt is detected, control is passed to the interrupt handler C 304 at the start of the chain. If the interrupt service routine determines that it was not its device that caused the interrupt, then control is passed to the interrupt handler B 308 pointed to by the next vector (stored address pointer 306). Likewise, interrupt handler B 308 would address interrupt handler A 312 through vector 310. If the appropriate handler was interrupt handler 312 at the end of the chain then every handler in the chain would be executed to service the interrupt. While shown with only three interrupt handlers for illustrative purposes, this process can be nested arbitrarily deep, and introduces a system integrity problem since it allows loadable interrupt handlers to alter interrupt vectors, and it relies on loadable interrupt handlers to maintain the interrupt chain.

Referring now to FIG. 3B, the first-level interrupt handler 324 pointed to by interrupt handler pointer 332 in RAM 116 can poll a number of second-level interrupt handlers 336-340 which may also be located in RAM 116 until a corresponding service routine is identified. This requires a number of transfer and return of control actions to be performed. This method introduces an excessive level of overhead causing time delays in the time-critical area of interrupt response.

As can be seen from the foregoing, both the chaining and polling methods require a number of transfer-of-control sequences to process an interrupt. These transfers of control can adversely affect the time it takes to respond to an interrupt.

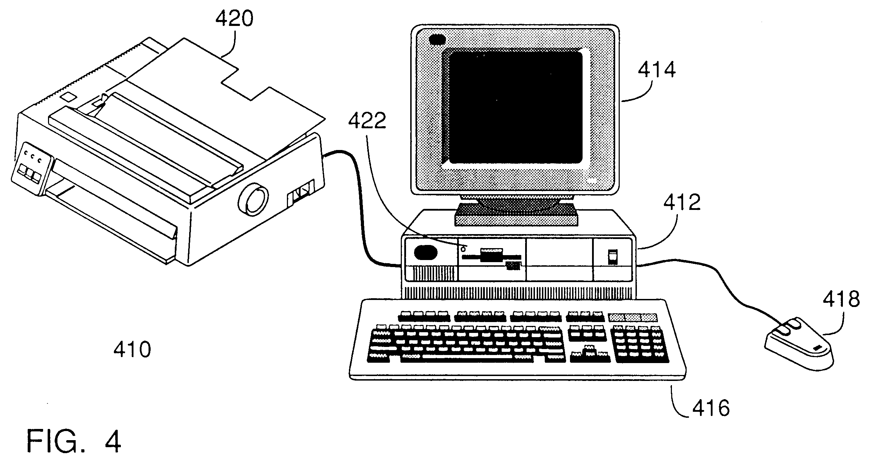

Referring now to the drawings, and in particular to FIG. 4, there is shown a Personal Computer System 410 comprising a number of components which are interconnected together. More particularly, a system unit 412 is coupled to and can drive an optional monitor 414 (such as a conventional video display). A system unit 412 can also be optionally coupled to input devices such as a keyboard 416 or a mouse 418. An optional output device such as a printer 420 can also be connected to the system unit 412. Finally the system unit 412 may include one or more mass storage devices such as the diskette drive 422. It should be noted that the present invention is applicable to a variety of computer systems utilizing interrupts, not just those based on the Intel 86 family of processors.

As will be described below, the system unit 412 responds to input devices such as the keyboard 416, the mouse 418, or local area networking interfaces. Additionally, input/output devices, such as the diskette drive 422, display 414, printer 420, and local area network communication system are connected to the system unit 412 in a manner well known. Of course, those skilled in the art are aware that other conventional components can also be connected to the system unit 412 for interaction therewith. The Personal Computer System 410 includes a processor 114 that is interconnected to a random access memory (RAM) 116, 560-564, a read only memory (ROM) 586, and a plurality of I/O devices 414, 416, 418, 420, 422.

In normal use, the Personal Computer System 410 can be designed to give independent computing power to a small group of users as a server or a single user and is inexpensively priced for purchase by individuals or small businesses. In operation, the processor 114 functions under an operating system such as IBM's OS/2 operating system or DOS. This type of operating system includes a BIOS interface between the I/O devices and the operating system. BIOS is more clearly defined in the *IBM Personal System/2 and Personal Computer BIOS Interface Technical Reference*, 1988, which is incorporated by reference herein. BIOS, which can be initially stored in a ROM on a motherboard or planar, includes diagnostic routines which are contained in a power on self test section referred to as POST.

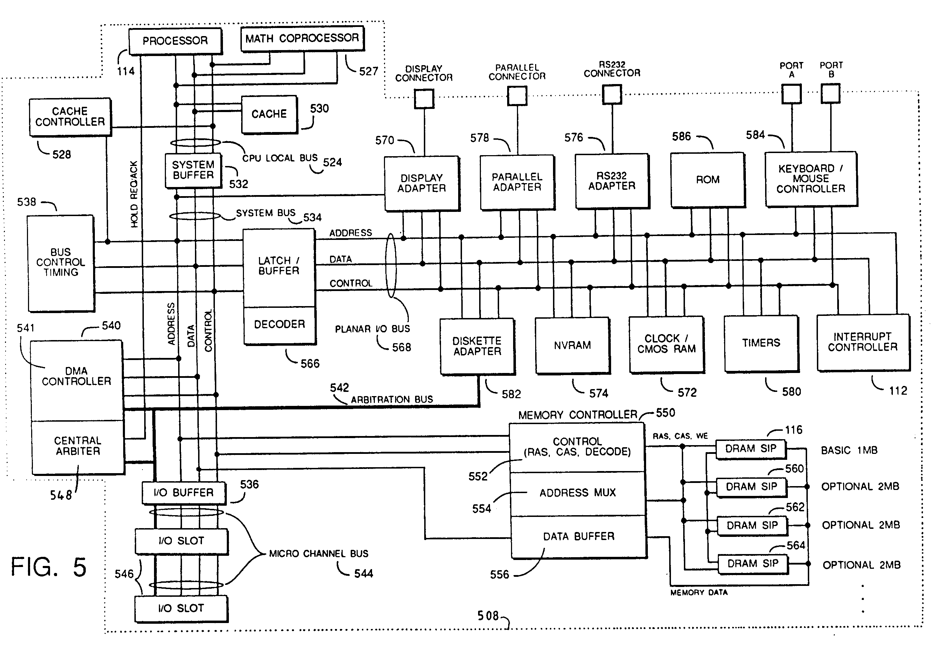

Referring to FIG. 5, there is shown a block diagram of the planar 508 in system unit 412 illustrating the various components of the planar 508. FIG. 5 further illustrates the connection of the planar 508 to the I/O slots 546 and other hardware of the Personal Computer System 410. Connected to the planar 508 is the processor 114 which is connected by a high speed CPU local bus 524 under control of a bus controlled timing unit 538 to a memory control unit 550 which is further connected to a volatile random access memory (RAM) 116. While any appropriate processor 114 can be used, one suitable processor is the Intel 80386.

The CPU local bus 524 (comprising data, address and control components) provides for the connection of a processor 114, an optional math coprocessor 527, a cache controller 528, and a cache memory 530. Also coupled on the CPU local bus 524 is a system buffer 532. The system buffer 532 is itself connected to a slower speed (compared to the CPU local bus) system bus 534, also comprising address, data and control components. The system bus 534 extends between the system buffer 532 and an I/O buffer 536. The system bus 534 is further connected to a bus control and timing unit 538 and a DMA unit 540. The DMA unit 540 is comprised of a central arbitration unit 548 and a DMA controller 541. The I/O buffer 536 provides an interface between the system bus 534 and an optional feature bus such as the Micro Channel bus 544. Connected to the Micro Channel bus 544 are a plurality of I/O slots 546 for receiving Micro Channel adapter cards (not shown) which may be further connected to an I/O device or memory. An arbitration control bus 542 couples the DMA controller 541 and central arbitration unit 548 to the I/O slots 546 and diskette adapter 582. Also connected to system bus 534 is a memory control unit 550 which is comprised of a memory controller 552, an address multiplexer 554, and a data buffer 556. The memory control unit 550 is further connected to a random access memory as represented by the RAM module 116. The memory controller 552 includes the logic for mapping addresses to and from the processor 114 to particular areas of RAM 116. While the Personal Computer System 410 is shown with a basic 1 megabyte RAM module 116, it is understood that additional memory can be interconnected as represented in FIG. 5 by the optional memory modules 560 through 564.

A latch buffer 566 is coupled between the system bus 534 and a planar I/O bus 568. The planar I/O bus 568 includes address, data, and control components respectively. Coupled along the planar I/O bus 568 are a variety of I/O adapters and other peripheral components such as the display adapter 570 (which is used to drive an optional display 414), a clock 572, nonvolatile RAM 574 (hereinafter referred to as NVRAM), an interrupt controller 112 (sometimes referred to as a Programmable Interrupt Controller or PIC), a RS232 adapter 576, a parallel adapter 578, a plurality of timers 580, a diskette adapter 582, a PC keyboard/mouse controller 584, and a read only memory (ROM) 586. The ROM 586 includes the BIOS which further includes POST which is used to test the major components of the personal computer system 410.

The clock 572 is used for time of day calculations. NVRAM 574 is used to store system configuration data. That is, the NVRAM 574 will contain values which describe the present configuration of the system. For example, NVRAM 574 contains information which describe the capacity of a fixed disk or diskette, the type of display, the amount of memory, etc. Furthermore, these data are stored in NVRAM 574 whenever a special configuration program is executed. The purpose of the configuration program is to store values characterizing the configuration of this system to NVRAM 574 which are saved when power is removed from the system.

Connected to keyboard/mouse controller 584 are ports A and B. These ports are used to connect a PC keyboard and mouse to the PC system. Coupled to RS232 adapter unit 576 is an RS232 connector. An optional device such as a modem can be coupled to the system through this connector.

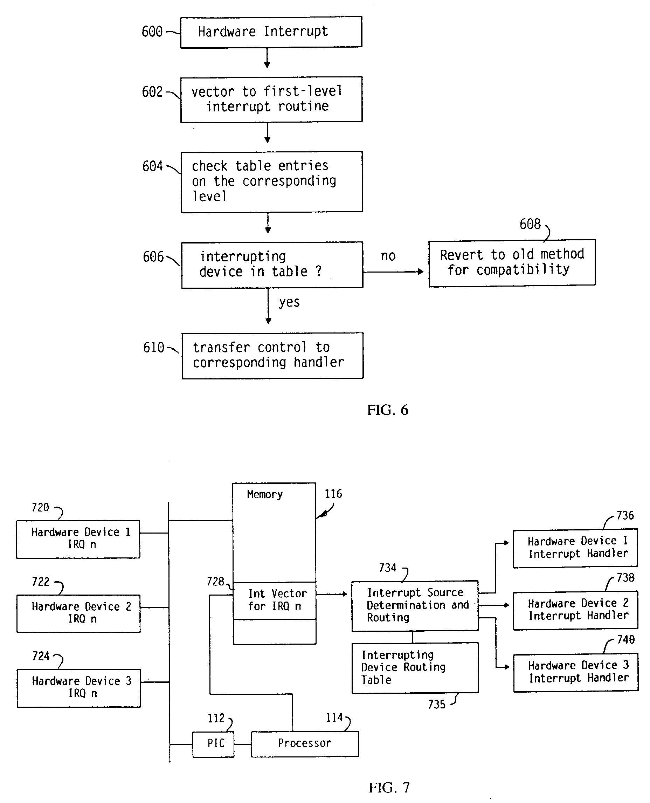

The method described below, with reference to FIG. 6, FIG. 7, FIG. 8, and FOG. 9, places the responsibility of selecting the device-level interrupt handler in a first-level interrupt handler which acts as a router. An interrupt handler is said to be a first-level interrupt handler if it is directly invoked after an interrupt without any indirection (i.e., having to execute one or more other handlers in order to locate the correct handler) before it was invoked. This router applies a set of simple tests determined by information stored in a table, and decides where control is to be transferred. The router determines the interrupting source and routes control directly to the correct (second-level) device interrupt handler. An interrupt handler is said to be a second-level interrupt handler if it is invoked directly after a first-level interrupt handler. That is, it is an interrupt handler with one level of indirection preceding it.

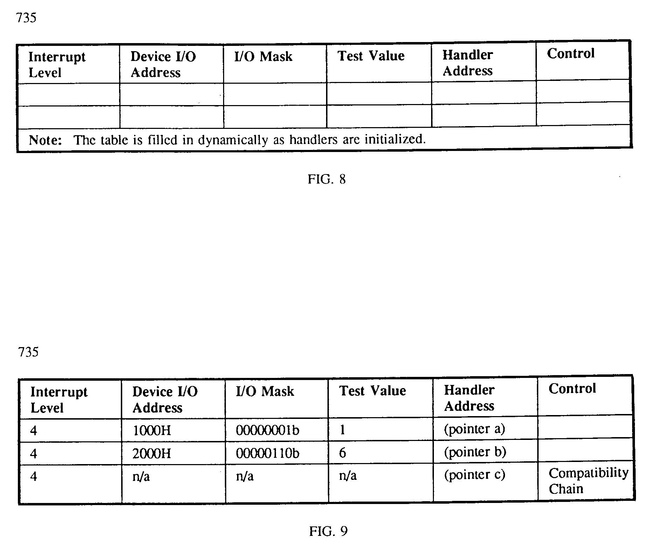

Referring now to FIG. 6, a device signals an interrupt 600. The interrupt is processed by the interrupt controller 112 which relays this information to the processor 114. The processor 114 then retrieves the address pointer 602 to the interrupt handler arid transfers execution to the instructions 604 located by the address pointer 602. The first-level interrupt handler then consults the "Interrupting Device Routing Table" 606 (IDRT), discussed in detail with regard to FIG. 8 and FIG. 9, and determines if the interrupting device is registered in said table. If the device is not registered in the table then control reverts back to an existing method 608. Therefore, supported devices can directly select the appropriate interrupt handler while unsupported devices can use chaining or polling to maintain compatibility. If the device is registered then control is then transferred to the corresponding device handler routine 610.

Referring now to FIG. 7, a detailed diagram of the interrupt process is shown. Hardware devices 720-724 operating on a particular interrupt level can present interrupt requests to the system. The interrupt controller 112 coordinates the interrupt requests and presents the event to the processor 114 according to a priority scheme. The processor 114 then obtains the corresponding interrupt vector 728 for this interrupt request from a vector table stored in system memory 116. Control is transferred to the first-level interrupt handler 734 pointed to by the interrupt vector 728. This first-level interrupt handler 734 determines the source of the interrupt through information contained in the IDRT 735 and routes control to the correct device routine, one of 736-740. The device routine then services the hardware device. The transfer of control from the first-level interrupt handler (the router) 734 to the corresponding device routine is done directly. There is no chaining or polling of potential handlers performed.

Referring now to FIG. 8, the format of an IDRT 735 is shown. Each supported device will have an entry in the table. This table can be initialized at system startup or entries can be created dynamically during system operation. One such way to initialize the IDRT 735 is during the stage where an operating system is loading device drivers. During device driver initialization the interrupt handler will be loaded into memory. The initialization portion of the device driver makes operating system service calls to register the interrupt handler's presence. This interrupt handler registration will include the creation of a table entry based on parameters passed to the operating system service routine by the device driver initialization routine. As a result, the IDRT 735 will contain predetermined table data at the end of initialization which is related to the I/O devices attached to the system. When an interrupt occurs the corresponding first-level interrupt handler consults the table of FIG. 8 to obtain the DEVICE I/O ADDRESS. By querying this address, the interrupt status of the I/O device can be obtained. The value at this I/O address will be logically combined with the I/O MASK information. The resulting value will be compared to the TEST VALUE, and if found to match, control will be passed to the HANDLER ADDRESS. Note that the device addresses can be I/O or memory mapped and that the handler address can be a physical address, an offset, or a pointer. The addressing mechanism depends on the implementation. The CONTROL field can be used to specify a variety of options such as but not limited to the type of logical operation to be performed on the data value and the I/O Mask, and the type of address present in the handler address field.

An implementation would most likely have a first-level interrupt handler for each hardware interrupt level. A single first-level handler would introduce additional overhead, but could be accomplished. With a separate first-level handler for each hardware interrupt level a separate table for each level could be maintained. If a single table is used in an implementation each first-level handler could search the table for its entries or maintain a pointer into the table for direct access to its corresponding entries.

As an example, FIG. 9 shows two devices on hardware interrupt level 4. The first-level interrupt handler will obtain the I/O data at I/O address 1000H and mask the value with the I/O mask of 000000001b (H denotes Hex, b denotes binary). This value will then be compared to the test value of 1. If there is a match then control will be transferred to the handler address, in this case "pointer a." If there was no match from the data obtained from I/O device address 1000H the process will be repeated with data from I/O device address 2000H.

Note that the ordering of the entries in the table determines relative priority within the level. The hardware interrupt controller still maintains its own priority mechanism for individual levels.

If the first-level interrupt handler exhausts the table entries and the interrupt has not yet been serviced then an existing scheme can be exercised in an attempt to service the interrupt, see the last entry of FIG. 9. This scheme could be an interrupt chain with the last entry the default interrupt handler. The default interrupt handler will mask off the interrupting level if it cannot be serviced. Masking the level off prevents any further interrupts from causing the system to fail.

## Claims

1. A computer system including:

an interrupt controller (112) for electrical connection to a plurality of I/O devices (414, 416), said interrupt controller comprising means for accepting interrupt signals from each of said I/O devices, means for prioritizing the interrupt signals according to levels, and means for outputting said prioritized interrupt signals;

a processor (114), said processor including means for receiving said prioritized interrupt signals from said interrupt controller;

storage means (116) for holding a table (735), each entry in the table being associated with an I/O device and including data identifying the I/O device and address data for an interrupt handler associated with the I/O device;

means for determining the interrupt status of each I/O device; and

comparison and selection means for comparing the device identifying data for each table entry with the I/O device interrupt status for that device and directly selecting the interrupt handler address associated with that I/O device when said comparison means indicates that the I/O device interrupt status and the device identifying data match.

2. A computer system as claimed in claim 1, further comprising:

a final entry in the table having the address of a chaining interrupt handler, said final entry being located at the end of the table and including device identifying data which does not match any I/O device interrupt status; and

means for selecting said chaining interrupt handler when an I/O device which does not match any other table entry presents an interrupt.

3. A computer system as claimed in claim 1, further comprising:

a final entry in the table having the address of a polling interrupt handler, said final entry being located at the end of the table and including device identifying data which does not match any I/O device interrupt status; and

means for selecting said polling interrupt handler when an I/O device which does not match any other table entry presents an interrupt.

4. A method for processing interrupts in a computer system, said method comprising the steps of:

receiving (600) an interrupt signal and interrupt status from at least one I/O device (414, 416);

prioritizing the interrupt signal according to interrupt level;

storing a table (735), each entry in the table being associated with an I/O device and including data identifying the I/O device and address data for an interrupt handler associated with the I/O device;

comparing the device identifying data for each table entry with the I/O device interrupt status for that device; and

directly selecting the interrupt handler address associated with that I/O device when said comparing step indicates that the I/O device interrupt status and the device identifying data match.

5. A method as claimed in claim 4, further comprising the steps of:

including a final entry in the table having the address of a chaining interrupt handler, said final entry being located at the end of the table and including device identifying data which does not match any I/O device interrupt status; and

selecting (608) said chaining interrupt handler when an I/O device which does not match any other table entry presents an interrupt.

6. A method as claimed in claim 4, further comprising the steps of:

including a final entry in the table having the address of a polling interrupt handler, said final entry being located at the end of the table and including device identifying data which does not match any I/O device interrupt status; and

selecting (608) said polling interrupt handler when an I/O device which does not match any other table entry presents an interrupt.

FIG. 1

116

```
                                          400 Hex
234 ──  Interrupt Pointer For
            Vector 255
                                          3FC Hex


                                          8 Hex
232 ──  Interrupt Pointer For
            Vector 1
                                          4 Hex
230 ──  Interrupt Pointer For
            Vector 0
                                          0 Hex
```

FIG. 2a

116

RAM

```
                    Gate For      ── 254
                  Interrupt #n

                    Gate For      ── 252
                 Interrupt #n-1


                    Gate For      ── 250
                  Interrupt #1

114                 Gate For      ── 248
    Processor     Interrupt #0
244
     IDT LIMIT
     IDT BASE
242
```

FIG. 2b

FIG. 3a

FIG. 3b

11

FIG. 4

FIG. 5

EP 0 511 769 A1

600 — Hardware Interrupt

↓

602 — vector to first-level
interrupt routine

↓

604 — check table entries
on the corresponding
level

↓

606 — interrupting
device in table ? — no → 608 — Revert to old method
for compatibility

↓ yes

610 — transfer control to
corresponding handler

FIG. 6

720 — Hardware Device 1
IRQ n

722 — Hardware Device 2
IRQ n

724 — Hardware Device 3
IRQ n

Memory 116

728 — Int Vector
for IRQ n

734 — Interrupt Source
Determination and
Routing

Interrupting
Device Routing
Table

735

736 — Hardware Device 1
Interrupt Handler

738 — Hardware Device 2
Interrupt Handler

740 — Hardware Device 3
Interrupt Handler

112 — PIC    114 — Processor

FIG. 7

14

735

| Interrupt Level | Device I/O Address | I/O Mask | Test Value | Handler Address | Control |
|---|---|---|---|---|---|
|  |  |  |  |  |  |
|  |  |  |  |  |  |
| Note: The table is filled in dynamically as handlers are initialized. | | | | | |

FIG. 8

735

| Interrupt Level | Device I/O Address | I/O Mask | Test Value | Handler Address | Control |
|---|---|---|---|---|---|
| 4 | 1000H | 00000001b | 1 | (pointer a) |  |
| 4 | 2000H | 00000110b | 6 | (pointer b) |  |
| 4 | n/a | n/a | n/a | (pointer c) | Compatibility Chain |

FIG. 9

European Patent Office

# EUROPEAN SEARCH REPORT

Application Number

EP 92 30 3535

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 13, no. 127 (P-848)29 March 1989 & JP-A-63 296 140 ( CANON INC ) 2 December 1988 * abstract * | 1,4 | G06F13/24 |
| A | EP-A-0 212 393 (INTERNATIONAL BUSINESS MACHINES CORPORATION) * page 12, line 1 - page 13, line 2; figures 3A,3B * | 1-6 | |
| A | PATENT ABSTRACTS OF JAPAN vol. 12, no. 271 (P-736)28 July 1988 & JP-A-63 053 649 ( CANON INC ) 7 March 1988 * abstract * | 1,4 | |
| A | IBM TECHNICAL DISCLOSURE BULLETIN. vol. 28, no. 6, November 1985, NEW YORK US page 2636; 'INSTRUCTION SPACE HANDLING FOR SEVERAL INTERRUPT LEVELS' | 1-6 | |
| | ----- | | TECHNICAL FIELDS SEARCHED (Int. Cl.5 ) |
| | | | G06F |

The present search report has been drawn up for all claims

| Place of search | Date of completion of the search | Examiner |
|---|---|---|
| THE HAGUE | 27 AUGUST 1992 | NYGREN P.P. |

EPO FORM 1503 03.82 (P0401)